# FASCICULE DE BREVET EUROPEEN

(11) **EP 2 479 103 B1**
(45) Date de publication et mention de la délivrance du brevet: **04.03.2015**
(21) Numéro de dépôt: 12305085.8
(22) Date de dépôt: 24.01.2012
(51) Int. Cl.: B63B 21/50, B63B 35/44, E02B 17/00, F03D 11/04, F03D 1/00

(54) **Support flottant pour structure off-shore**
Schwimmende Unterkonstruktion für eine Off-Shore Struktur
Floating support for an off-shore structure

(30) Priorité: 25.01.2011 FR 1150579
(43) Date de publication de la demande: 25.07.2012
(73) Titulaire: DCNS, 75015 Paris (FR)
(72) Inventeur: Thieffry, Phillippe, 56260 Larmor Plage (FR); Moiret, Cyrille, Jacques, 56600 Lanester (FR)
(74) Mandataire: Blot, Philippe Robert Emile

(56) Documents cités:
- EP-A1- 1 876 093
- WO-A1-2010/110330
- WO-A2-2009/036107
- WO-A2-2009/050547
- WO-A2-2010/143967
- GB-A- 2 147 549

## Description

La présente invention concerne un support flottant pour une structure off-shore telle que notamment une éolienne.

Plus particulièrement, l'invention se rapporte à un support flottant qui comporte des moyens en forme de mât dont la partie supérieure peut être associée à la structure comme par exemple à une nacelle d'éolienne et dont la partie inférieure est associée à des moyens en forme de flotteurs équipés de moyens de ballastage.

Ces différents moyens permettent alors lorsque les moyens en forme de flotteurs sont déballastés, le remorquage du support de et vers un site d'exploitation où les moyens de ballastage des flotteurs sont remplis par exemple d'eau de mer, afin d'échouer le support, de sorte que celui-ci repose sur le fond.

Des supports de ce type sont déjà bien connus dans l'état de la technique et sont par exemple décrit dans le document WO2010/143967 A2, mais présentent un certain nombre d'inconvénients notamment au niveau de leur stabilisation sur le site d'exploitation.

Certains de ces supports nécessitent en effet la mise en oeuvre de lourds moyens de génie civil et de levage tels que par exemple des barges de grandes dimensions équipées de grues de levage, pour assurer l'acheminement du support, la préparation du site de réception et éventuellement le scellement des fondations de réception de ce support.

Le but de l'invention est donc de résoudre ces problèmes.

A cet effet, l'invention est définie dans la revendication 1.

Selon d'autres aspects de l'invention, le support flottant comporte l'une ou plusieurs des caractéristiques suivantes :
- les moyens de réception se présentent sous la forme de traverses sur lesquelles reposent les blocs de lest,
- les traverses sont déformables pour s'adapter à la configuration de la zone d'échouage,
- les traverses comprennent des treillis métalliques articulés,
- les traverses comprennent des chaînes,
- les blocs de lest sont formés par des blocs de béton,
- il comporte des moyens de réglage de la position des moyens en forme de flotteurs par rapport aux moyens en forme de mât, et
- les moyens de réglage de la position des moyens en forme de flotteurs par rapport aux moyens en forme de mât comprennent des mécanismes à pignon-crémaillère entre les extrémités des flotteurs et le mât et les moyens en forme de flotteurs sont reliés aux moyens en forme de mât par des poutres de liaison articulées.

L'invention sera mieux comprise à l'aide de la description qui va suivre donnée uniquement à titre d'exemple et faite en se référant aux dessins annexés, sur lesquels :
- les Figures 1 et 2 représentent un support flottant selon l'invention respectivement en phase de remorquage et en phase d'échouage,
- la Figure 3 représente des moyens en forme de flotteurs entrant dans la constitution d'un tel support,
- la Figure 4 illustre l'ancrage d'un tel support, et
- la Figure 5 illustre une variante de réalisation d'un tel support.

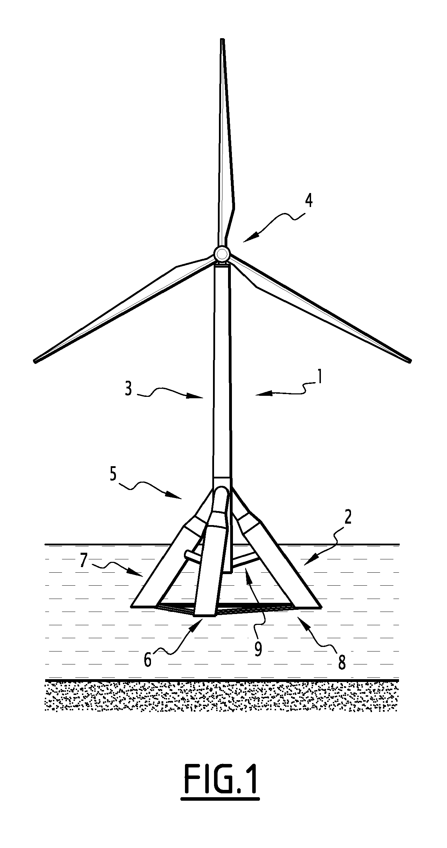

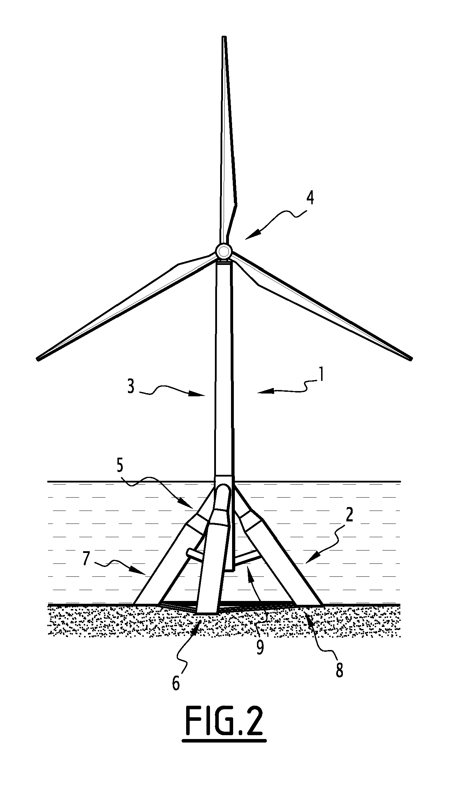

On a en effet illustré sur les figures 1 et 2, un support flottant pour une structure off-shore telle qu'une éolienne.

Cette structure est désignée par la référence générale 1 sur ces figures et le support flottant est désigné par la référence générale 2.

Ce support comporte de façon classique des moyens en forme de mât de support, désignés par la référence générale 3, dont la partie supérieure est associée à la structure telle que par exemple une nacelle d'éolienne désignée par la référence générale 4, et dont la partie inférieure est associée à des moyens en forme de flotteurs, désignés par la référence générale 5.

Dans l'exemple de réalisation décrit sur ces figures, les moyens en forme de flotteurs comportent par exemple trois flotteurs allongés respectivement 6, 7 et 8, constitués par exemple à base de tubes métalliques par exemple cylindriques, dont une extrémité est associée aux moyens en forme de mât 3.

Ces flotteurs 6, 7 et 8 sont reliés entre eux par des poutres de liaison dont l'une est par exemple désignée par la référence générale 9 sur ces figures.

De façon classique, ces moyens en forme de flotteurs sont équipés de moyens de ballastage.

En mode déballasté, ces flotteurs permettent alors de remorquer le support vers et depuis le site d'exploitation, celui-ci flottant derrière par exemple un remorqueur.

Une fois sur site, les moyens de ballastage des flotteurs sont ballastés, c'est-à-dire remplis d'eau de mer, de façon à permettre au support de reposer sur le fond.

Ces phases dites de remorquage et d'échouage sont illustrées respectivement sur les Figures 1 et 2.

Une fois en position d'échouage, c'est-à-dire lorsque le support repose sur le fond, l'ancrage de cette structure peut être réalisé de façon simple en plaçant des blocs de lest sur le flotteur.

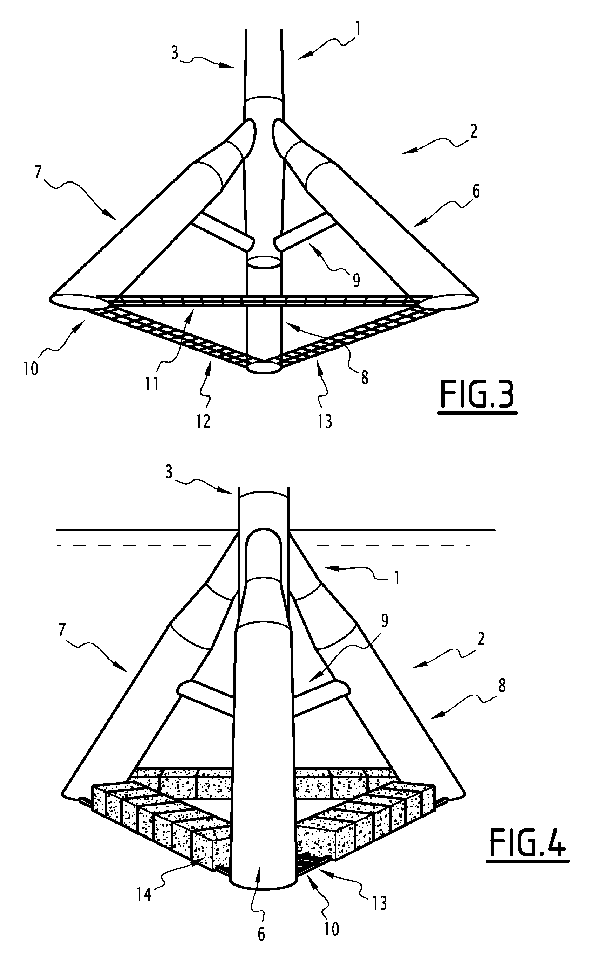

Ceci est par exemple illustré sur les figures 3 et 4 sur lesquelles on reconnaît une portion du support 1, les moyens en forme de flotteurs 2, les moyens en forme de mât 3, les tubes constituant les flotteurs 6, 7 et 8, et les poutres de liaison telles que la poutre 9.

De plus, les moyens en forme de flotteurs comportent des moyens de réception de blocs de lest pour stabiliser le support en position d'échouage.

Ces moyens de réception sont désignés par la référence générale 10 sur ces figures 3 et 4, et se présentent par exemple sous la forme de traverses s'étendant entre les bases des flotteurs 6, 7 et 8.

Ces traverses peuvent se présenter sous différentes formes de réalisation et peuvent être déformables pour s'adapter à la configuration de la zone d'échouage.

Ainsi par exemple elles peuvent être réalisées sous la forme de treillis métalliques articulés comme cela est illustré sur ces Figures 3 et 4 ou encore sous la forme de chaînes d'ancrage.

Ainsi par exemple sur la Figure 3, trois traverses en forme de treillis métalliques articulés respectivement 11, 12 et 13, sont prévues entre les parties inférieures des tubes en forme de flotteurs 6, 7 et 8.

Une fois en position d'échouage, et comme cela est illustré sur la Figure 4, des blocs de lest constitués par exemple de blocs de béton, sont simplement posés sur ces traverses pour stabiliser le support en position d'échouage.

L'un de ces blocs de lest est par exemple désigné par la référence générale 14 sur cette Figure 4.

Ceci permet alors au support de s'adapter à la configuration du fond sur lequel il repose tout en permettant de minimiser la mise en oeuvre des moyens de génie civil et de levage utilisés dans l'état de la technique, ce qui se traduit par des gains notamment en termes financiers sur le coût global d'installation de ce support, tout en améliorant sa stabilité.

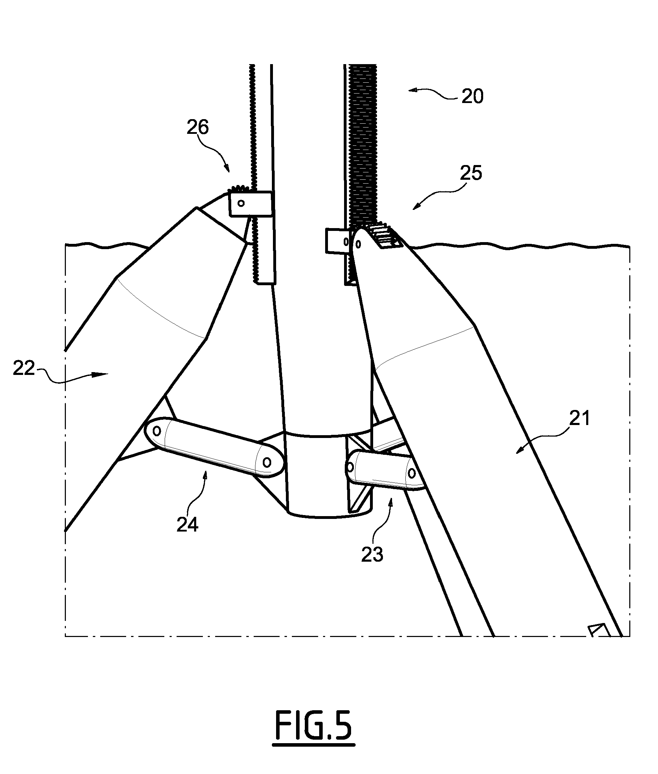

Bien entendu d'autres modes de réalisation peuvent être envisagés comme celui illustré sur la figure 5, dans lequel il est prévu des moyens de réglage de la position des flotteurs par rapport au mât afin d'adapter le support à la configuration du fond tout en maintenant ce mât à la verticale.

Sur cette figure 5, le mât est désigné par la référence générale 20 et deux flotteurs respectivement 21 et 22 sont illustrés. Ces flotteurs sont associés à des poutres de liaison de ceux-ci au mât 20, respectivement 23 et 24.

Les extrémités de ces poutres de liaison sont par exemple articulées sur les flotteurs et le mât et les extrémités correspondantes de ces flotteurs sont associées au mât par l'intermédiaire de moyens de réglage en position. Ceux-ci sont constitués par tous moyens appropriés tels que par exemple des mécanismes à pignon-crémaillère activés par exemple par des moyens de motorisation de type classique comme par exemple un moteur électrique ou hydraulique. Ces mécanismes sont désignés par les références générales 25 et 26 sur cette figure 5 et sont également associés à tous moyens de blocage en position de type approprié.

Ceci permet alors de régler en position les différents flotteurs afin d'adapter le support à la configuration du fond et de maintenir le mât en position verticale.

Bien entendu d'autres modes de réalisation encore peuvent être envisagés.

## Revendications

1. Support flottant pour structure off-shore telle qu'une éolienne (4), du type comportant des moyens en forme de mât (3 ; 20) dont la partie inférieure est associée à des moyens en forme de flotteurs (5 ; 21, 22) équipés de moyens de ballastage permettant un déballastage de ces moyens en forme de flotteurs pour le remorquage du support et un ballastage de ceux-ci pour permettre l'échouage de ce support en position, **caractérisé en ce que** les moyens en forme de flotteurs comportent des moyens (10) de réception de blocs de lest (14) pour stabiliser le support en position d'échouage, et **en ce que** les moyens en forme de flotteurs comportent des moyens en forme de tubes (6, 7, 8) disposés régulièrement autour des moyens en forme de mât (3) et dont les extrémités inférieures sont raccordées par les moyens (10) de réception des blocs de lest (14).

2. Support flottant selon la revendication 1, **caractérisé en ce que** les moyens de réception se présentent sous la forme de traverses (11, 12, 13) sur lesquelles les blocs de lest (14) sont destinés à être simplement posés en position d'échouage du support flottant.

3. Support flottant selon la revendication 2, **caractérisé en ce que** les traverses sont déformables pour s'adapter à la configuration de la zone d'échouage.

4. Support flottant selon la revendication 2 ou 3, **caractérisé en ce que** les traverses comprennent des treillis métalliques articulés.

5. Support flottant selon la revendication 2 ou 3, **caractérisé en ce que** les traverses comprennent des chaînes.

6. Support flottant selon l'une quelconque des revendications précédentes, **caractérisé en ce qu'**il comporte des moyens (25, 26) de réglage de la position des moyens en forme de flotteurs (21, 22) par rapport aux moyens en forme de mât (20).

7. Support flottant selon la revendication 6, **caractérisé en ce que** les moyens (25, 26) de réglage de la position des moyens en forme de flotteurs (21, 22) par rapport aux moyens en forme de mât (20) comprennent des mécanismes à pignon-crémaillère entre les extrémités des flotteurs et le mât et **en ce que** les moyens en forme de flotteurs (21, 22) sont reliés aux moyens en forme de mât par des poutres de liaison articulées (23, 24).

## Patentansprüche

1. Schwimmende Unterkonstruktion für eine Offshore-Struktur wie ein Windrad (4) der Bauart, die Mittel in Form eines Masts (3; 20) aufweist, deren unterer Abschnitt mit Mittel in Form von Schwimmern (5; 21, 22) verbunden ist, die mit Ballastmitteln ausgestattet sind, die eine Entlastung dieser Mittel in Form von Schwimmern für das Abschleppen der Unterkonstruktion und eine Belastung derselben erlauben, um die Strandung dieser Unterkonstruktion in Position zu erlauben, **dadurch gekennzeichnet, dass** die Mittel in Form von Schwimmern Empfangsmittel (10) von Lastblöcken (14) aufweisen, um die Unterkonstruktion in Strandungsposition zu stabilisieren, und dass die Mittel in Form von Schwimmern Mittel in Form von Rohren (6, 7, 8) aufweisen, die regelmäßig um Mittel in Form eines Masts (3) angeordnet sind und deren untere Enden anhand der Empfangsmittel (10) der Lastblöcke (14) angeschlossen sind.

2. Schwimmende Unterkonstruktion nach Anspruch 1, **dadurch gekennzeichnet, dass** die Empfangsmittel die Form von Querträgern (11, 12, 13) haben, auf denen die Lastblöcke (14) bestimmt sind, in Strandungsposition der schwimmenden Unterkonstruktion einfach abgestellt zu sein.

3. Schwimmende Unterkonstruktion nach Anspruch 2, **dadurch gekennzeichnet, dass** die Querträger verformbar sind, um sich an die Konfiguration der Strandungszone anzupassen.

4. Schwimmende Unterkonstruktion nach Anspruch 2 oder 3, **dadurch gekennzeichnet, dass** die Querträger angelenkte Metallgitter umfassen.

5. Schwimmende Unterkonstruktion nach Anspruch 2 oder 3, **dadurch gekennzeichnet, dass** die Querträger Ketten umfassen.

6. Schwimmende Unterkonstruktion nach einem der vorangehenden Ansprüche, **dadurch gekennzeichnet, dass** sie Einstellmittel (25, 26) zur Einstellung der Position der Mittel in Form von Schwimmern (21, 22) im Verhältnis zu den Mitteln in Form eines Masts (20) aufweist.

7. Schwimmende Unterkonstruktion nach Anspruch 6, **dadurch gekennzeichnet, dass** die Einstellmittel (25, 26) zur Einstellung der Position der Mittel in Form von Schwimmern (21, 22) im Verhältnis zu den Mitteln in Form eines Masts (20) Mechanismen mit Zahnrad und Zahnstange zwischen den Enden der Schwimmer und dem Mast umfassen und dass die Mitteln in Form von Schwimmern (21, 22) mit dem Mitteln in Form eines Masts anhand angelenkter Verbindungsbalken (23, 24) verbunden sind.

## Claims

1. A floating support for an off-shore structure such as a wind turbine (4), of the type comprising means forming a mast (3; 20), the lower part of which is associated with means forming floats (5; 21, 22) equipped with ballasting means allowing deballasting of those float-forming means for towing of the support and ballasting thereof to allow grounding of that support in position, **characterized in that** the float-forming means comprise means (10) for receiving ballast blocks (14) to stabilize the support in the grounded position, and **in that** the float-forming means comprise means in the form of tubes (6, 7, 8) arranged regularly around the mast-forming means (3) and the lower ends of which are connected by the means (10) for receiving ballast blocks (14).

2. The floating support according to claim 1, **characterized in that** the receiving means assume the form of crosspieces (11, 12, 13), on which the ballast blocks (14) are designed simply to be placed in the grounding position of the floating support.

3. The floating support according to claim 2, **characterized in that** the crosspieces are deformable to adapt to the configuration of the grounding zone.

4. The floating support according to claim 2 or 3, **characterized in that** the crosspieces comprise articulated metal trellises.

5. The floating support according to claim 2 or 3, **characterized in that** the crosspieces comprise chains.

6. The floating support according to any one of the preceding claims, **characterized in that** it comprises means (25, 26) for adjusting the position of the float-forming means (21, 22) relative to the mast-forming means (20).

7. The floating support according to claim 6, **characterized in that** the means (25, 26) for adjusting the position of the float-forming means (21, 22) relative to the mast-forming means (20) comprise pinion-rack mechanisms between the ends of the floats and the mast and **in that** the float-forming means (21, 22) are connected to the mast-forming means by articulated connecting beams (23, 24).
